# EUROPEAN PATENT APPLICATION

(11) **EP 0 952 709 A1**
(43) Date of publication of application: **27.10.1999**
(21) Application number: 98303022.2
(22) Date of filing: 20.04.1998
(51) Int. Cl.: H04L 12/56, H04N 7/26

(54) **Data storage and supply**

(71) Applicant: BRITISH TELECOMMUNICATIONS public limited company, London EC1A 7AJ (GB)
(72) Inventor: The designation of the inventor has not yet been filed
(74) Representative: Evershed, Michael

(57) **Abstract**

A server can store items of data in a database and supply items of data, on request, through a network to clients in the form of terminals. When storing an item of data, the data is divided into individual portions and each portion is allocated a flag in accordance with the importance of its information content. When supplying an item of data, the available bandwidth of the connection to the terminal is measured and individual portions of data of lower importance are discarded so that the data can be transmitted within the available bandwidth.

## Description

This invention relates to a method of storing data in a database, a method of supplying data from a server associated with a database through a network to a client, and a server for supplying data.

Data transport requirements in the pre-multimedia era were mainly for uncorrupted delivery of audio signals or data. These requirements were largely satisfied by the TCP/IP and the ISO transport protocols. This was adequate for traditional data applications like FTP and Telnet but inadequate for applications requiring real-time delivery. A continuous media signal, such as an audio signal or a video signal, has different communications needs: data must be transmitted and delivered as a steady data stream since irregularities in the data-flow will cause degradation of audio or video signals. On the other hand, both video and audio signals can tolerate a certain amount of information loss. Audio signals can tolerate a 1% loss as long as each error burst is less than 4ms. The acceptable error loss for video signals is dependent on the encoding and compression schemes used.

A customer accessing information on a server wants the best possible quality of service (QoS) from the access network and end-system client being used. There are many factors affecting this QoS with bandwidth being one of the most significant in most applications. The clients may be connected to the server over connections using a wide variety of different access technologies, each of which has its own set of performance measures. The main aspect of a connection which is relevant to the transmission of a media signal is the data bandwidth that it offers. For example, customers on high bandwidth connections, such as Ethernet, may be able to watch the content as its creator intended it to look. However, another customer using the same service but connected via a much slower connection, for example, a modem, whilst obviously not seeing a full motion video, may not see anything, or at least anything useful, due to the non-graceful degradation of a video signal in the form of a data stream over low bandwidth connections.

In the past, it has been possible to provide a variety of QoS by storing multiple copies of the source data on a server, each copy being encoded according to a different compression ratio or algorithm. The copy of the data suitable for a given access network and terminal is then selected by the server and transmitted to the user. This has the advantage that the data has been encoded according to a coding algorithm such that the received data is acceptable to the user. However, the management of multiple copies of a single source can be burdensome.

Alternatively, a single copy of the source data may be stored on a server and, when the capabilities of the access network and user terminal are known to the server, the source data is transcoded into a suitable format. Since a single version of the source data is stored, management of the data is simplified compared to the multiple copy arrangement. However, the data received by the user may be so degraded as to be unintelligible to the user.

Other known techniques refer to filtering data before transmission to reduce the amount of data to be transmitted. An example of such a filtering technique has been developed by Columbia University, in New York, USA (A Campbell, A. Eleftheriadis and C. Aurrecoechea, "End-to-End QoS Management for Adaptive Video Flows", 6th IFIP International Conference on High Performance Networking, 1995). This work relates to dynamic management of QoS. Other filtering techniques include frame-dropping (in which, for example, inter-frame coded pictures are dropped in preference to intra-frame coded pictures), and frequency filters in which low-pass filtering, colour reduction filtering and colour-to-monochrome filtering occur (N. Yeadon, "Quality of Service Filtering for Multimedia Communications", PhD thesis, Lancaster University, May 1996). The effect of different filters vary as a function of the content and complexity of the source data. Removing all the colour information can produce a data rate drop of about 10%. Bandwidth reductions of 65% to 85% can be achieved by using a low-pass filter and requantisation filter. However, like the transcoding technique, the data reproduced at the user's terminal may be so degraded as to be unacceptable to the user.

In accordance with the first aspect of this invention, there is provided a method of storing an item of data in a database, said method comprising the steps of:
dividing the data when it is in the form of a data stream into a series of individual portions;
ranking the individual portions in accordance with the importance of their information content;
allocating a flag to each portion indicating the importance of its information content; and
storing the data and the flags in the database.

According to a second aspect of this invention, there is provided a method of supplying data from a server through a network to a client, said server being associated with a database, said method comprising the following steps performed by the server:
receiving a request from the client for an item of data;
retrieving the requested item of data from the database in the form of a data stream, the data stream comprising a series of individual portions of data each of which is allocated a flag indicating the relative importance of its content;
measuring the bandwidth available for transmission of data from the server through the network to the client;
with the individual portions ranked in accordance with their relative importance, identifying the portions of lower importance which are to be discarded so that the data can be transmitted to the client within the available bandwidth; and
before transmitting the data to the client, discarding the identified portions.

According to a third aspect of this invention, there is provided a method of storing items of data in a database and supplying items of data retrieved from the database through a network to a client, said database being associated with a server, when storing an item of data, said method comprising the steps of:
dividing the data when it is in the form of a data stream into a series of individual portions;
ranking the individual portions in accordance with the importance of their information content;
allocating a flag to each portion indicating the importance of its information content; and
storing the data and the flags in the database;
when supplying an item of data through the network to a client, said method comprising the following steps performed by the server:
receiving a request from the client for an item of data;
retrieving the requested item of data from the database in the form of a data stream, the data stream comprising a series of individual portions of data each of which is allocated a flag indicating the relative importance of its information content;
measuring the bandwidth available for transmission of data from the server through the network to the client;
with the individual portions ranked in accordance with their relative importance, identifying the portions of lower importance which are to be discarded so that the data can be transmitted to the client within the available bandwidth; and
before transmitting the data to the client, discarding the identified portions.

According to a fourth aspect of this invention, there is provided a server for supplying a requested item of data through a network to a client, said server comprising:
receiving means for receiving a request from a client for an item of data;
retrieving means for retrieving the requested item of data from a database in the form of a data stream, the data stream comprising a series of individual portions of data each of which is allocated a flag indicating the relative importance of its information content;
bandwidth measuring means for measuring the bandwidth available for transmission of data from the server through a network to a client;
identifying means for identifying in a data stream the portions of lower importance which are to be discarded so that the data stream can be transmitted within the available bandwidth as measured by the bandwidth measuring means; and
means for discarding portions of data identified by the identifying means from a data stream before transmitting the data stream to a client.

The invention will now be described by way of example only, with reference to the accompanying drawing, in which:
Figure 1 shows a complete end-to-end network based system incorporating the invention;
Figure 2 is a flow chart of the operations performed in the system of Figure 1 when storing an item of data; and
Figure 3 is a functional block diagram of the components of the server shown in Figure 1 and associated database which are used when supplying an item of data to a client.

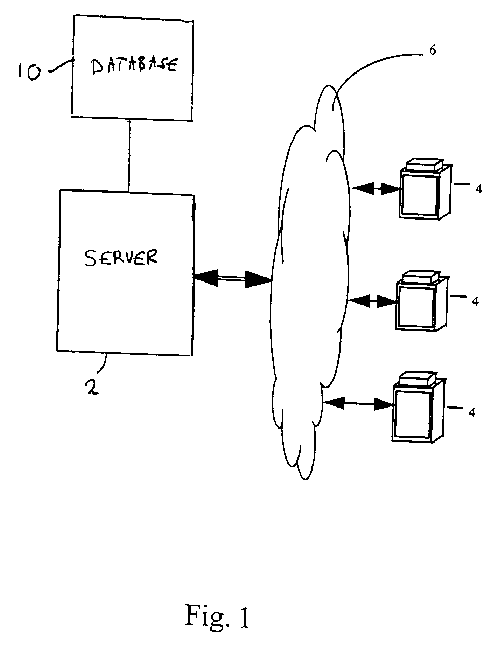

Referring now to Figure 1, there is shown an end-to-end network based system for storage of and supplying items of data such as multimedia data or video data. Such data is also known as content. The system comprises a server 2 for storing items of data (or content) in a database 10 and supplying items of data retrieved from the database 10, a plurality of terminals 4 acting as clients providing a user interface to the server 2 and an access network 6 for providing communications links between the terminals 4 and the server 2. The access network 6 may be any network, for example, an ATM network, a LAN (Ethernet) network, a mobile network, an ISDN dial-up network or a PSTN dial-up network. There are therefore a large range of data rates possible between the server 2 and the terminals 4 and therefore a wide choice of quality is available to the user.

Ensuring that each client 4 obtains the maximum possible QoS is challenging in an environment where each client 4 may be connected via a different and time varying link to the server 2.

Managing this problem requires the ability to adapt the QoS over time in response to the dynamic bandwidth of the link in question. Ideally, all users of the system would see items of data with their original quality but, under circumstances where due to bandwidth constraints this is not possible, the system should adapt in an intelligent way. Existing systems, as described above, use various types of filtering to achieve the required reduction in bandwidth. Whilst at first sight this approach is technically acceptable, artistically it may not be. Such filtering degrades all the delivered material equally, by reducing cover depth, frame rate, resolution, high frequency information or whatever. This may leave artistically essential elements of the presentation illegible or unintelligible. The invention guarantees a delivery of high importance information contained in an item of data in the presence of bandwidth constraints.

To achieve this, individual portions of an item of data are coded in accordance with the relative importance of their information content and the data is stored in the database 10 for retrieval when a request for an item of data is received from a client.

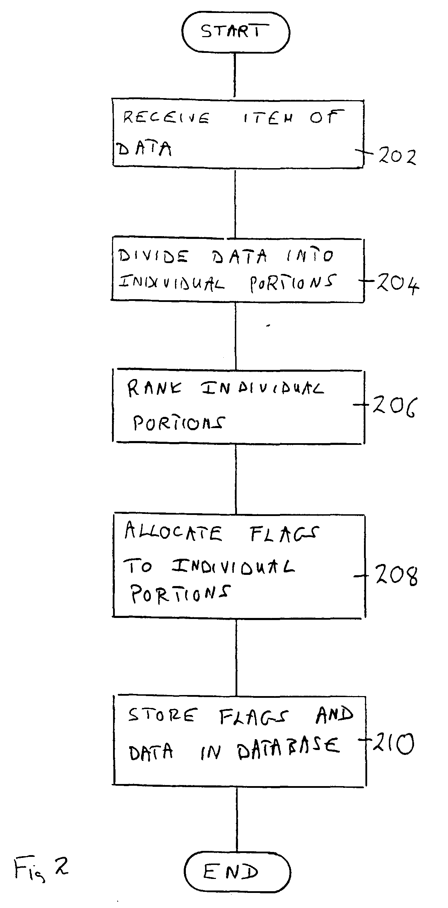

Figure 2 shows a flow diagram illustrating the coding of an item of source data in accordance with this invention. In a step 202, an item of data is received by the server 2 in the form of a data stream. The data may be transmitted to the server 2 over the network 6 or it may be supplied to the server 2 on a storage medium such as a floppy disk. The data stream may be a video data stream encoded according to the MPEG 1 standard. Alternatively, it may be a multimedia data stream, representing a mixture of types of media, such as audio, video, image or text, or it may be a data stream representing a single media other than video.

The data stream is generated in a way that permits specific frames or a sequence of frames to be selected by a user. In a step 204, the data stream is divided into a series of individual portions. Each portion is defined by a start frame and end frame.

In a step 206, the individual portions are ranked in accordance with the relative importance of their information content. The criteria of deciding how to rank the individual portions according to the relative importance of their information content is defined by the user. For example, an artistically good image of an object may be ranked more highly than an artistically poor image of an object. An image of an object to be sold may be ranked more highly than a video sequence showing the product in use.

In a step 208, a flag is allocated to each individual portion indicating the relative importance of its information content. Lastly, in a step 210, the items of data and the flags are stored in the database 10.

Steps 204, 206 and 208 may be done manually or by an automated process performed by the server 2 under the control of a software program, for example using image searching techniques to find predefined important portions of the data stream. An example of suitable software which can be used in performing steps 204, 206 and 208 is the Virage image software linked into an Informix database management system.

Each flag represents metadata related to the respective data portion. The metadata is then stored in a file together with identifiers (for example, start frame and end frame) of the individual portion associated with the metadata. The following table shows an example of the structure of such a file:

| **Level** | **Sample Size (Bytes)** | **Start Frame** | **End Frame** |
|---|---|---|---|
| 1 | 95746 | 30 | 30 |
| 2 | 473272 | 31 | 100 |
| 3 | 1848855 | 101 | 337 |
| 1 | 84597 | 338 | 338 |

In the present example, there are three flags representing, respectively, three levels of importance. Level 1 indicates that the identified portion of the source data is of the highest level of importance, level 2 is the next in importance and level 3 is of the lowest importance.

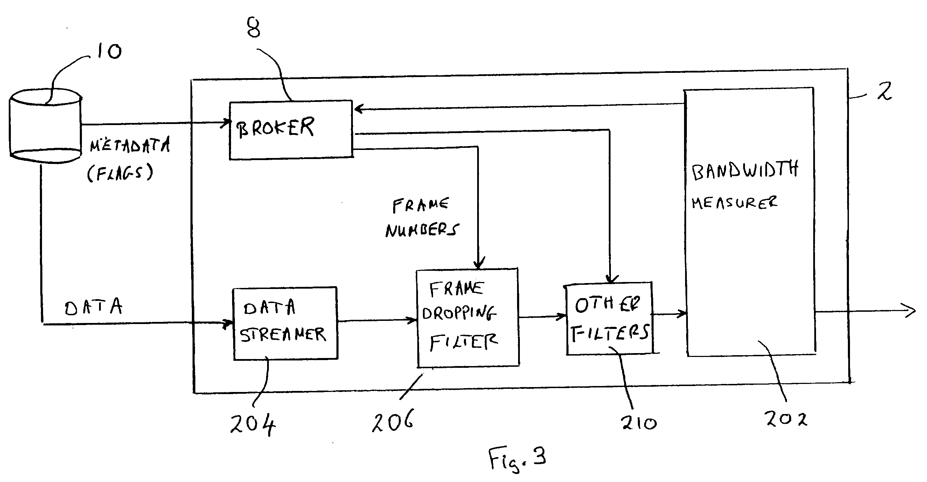

As will be described below with reference to Figure 3, when a connection is established between the server 2 and a terminal 4, the server 2 measures the bandwidth of the connection. The bandwidth is also measured dynamically during transmission of data. The bandwidth is used to determine which levels of data are to be transmitted to the terminal 4.

Referring now to Figure 3, there are shown the functional components of a server 2 which are used to supply data to one of the terminals 4. These components comprise a broker 8, a data streamer at 204, a frame-dropping filter 206, other filters 210 and a bandwidth measurer 202. The other filters 210 comprise a frequency filter, a colour reduction filter and a colour-to-monochrome filter.

When the server 2 receives a request from a terminal 4 for an item of data, the data streamer 204 retrieves the data from the database 10 and converts the data into a data stream. When retrieved from the database 10, the data may be coded, for example, MPEG coded. As coded data passes through the server 2, it is not decoded.

After leaving the data streamer 204, the data stream passes through the frame-dropping filter 206 and, optionally, through the other filters 210. Before leaving the server 2, the data stream is wrapped in an appropriate protocol to provide an output signal. The output signal is transmitted through the network 6 to the terminal 4.

The bandwidth measurer 202 measures the currently available bandwidth of the connection between the server 2 and the terminal 4. The bandwidth measurer 202 informs the broker 8 of the value of the available bandwidth.

The broker 8 retrieves the metadata or flags for the requested item of data. Using the metadata and the value for the available bandwidth, the broker 8 decides which portions of data based on their levels of importance are to be discarded to meet the available bandwidth. Thus, with the individual portions of the requested item of data ranked by the levels of importance of their information content, the broker 8 decides on the dividing line between the portions which can be transmitted and the portions which are to be discarded. For example, with portions of data ranked into three levels of importance, the broker 8 might decide that only portions of the highest level of importance can be transmitted.

The broker 8 informs the frame-dropping filter 206 of the start and end frame numbers of each portion which is to be discarded. Frame-dropping filter 206 removes these portions from the data stream which it receives from the data streamer 204. The broker 8 also decides whether further filtering is required. If further filtering is required the broker 8 instructs the other filters 210 to apply such filtering.

Because the data is filtered primarily in accordance with its information content and not its physical characteristics, the bandwidth of the output signal can be controlled while maintaining the quality of the data received by the user of the terminal 4. Consequently, the user will normally receive data in the form which conveys the original message intended by the author of the data.

## Claims

1. A method of storing an item of data in a database, said method comprising the steps of:
dividing the data when it is in the form of a data stream into a series of individual portions;
ranking the individual portions in accordance with the importance of their information content;
allocating a flag to each portion indicating the importance of its information content; and
storing the data and the flags in the database.

2. A method of supplying data from a server through a network to a client, said server being associated with a database, said method comprising the following steps performed by the server:
receiving a request from the client for an item of data;
retrieving the requested item of data from the database in the form of a data stream, the data stream comprising a series of individual portions of data each of which is allocated a flag indicating the relative importance of its content;
measuring the bandwidth available for transmission of data from the server through the network to the client;
with the individual portions ranked in accordance with their relative importance, identifying the portions of lower importance which are to be discarded so that the data can be transmitted to the client within the available bandwidth; and
before transmitting the data to the client, discarding the identified portions.

3. A method of storing items of data in a database and supplying items of data retrieved from the database through a network to a client, said database being associated with a server, when storing an item of data, said method comprising the steps of:
dividing the data when it is in the form of a data stream into a series of individual portions;
ranking the individual portions in accordance with the importance of their information content;
allocating a flag to each portion indicating the importance of its information content; and
storing the data and the flags in the database;
when supplying an item of data through the network to a client, said method comprising the following steps performed by the server:
receiving a request from the client for an item of data;
retrieving the requested item of data from the database in the form of a data stream, the data stream comprising a series of individual portions of data each of which is allocated a flag indicating the relative importance of its information content;
measuring the bandwidth available for transmission of data from the server through the network to the client;
with the individual portions ranked in accordance with their relative importance, identifying the portions of lower importance which are to be discarded so that the data can be transmitted to the client within the available bandwidth; and
before transmitting the data to the client, discarding the identified portions.

4. A server for supplying a requested item of data through a network to a client, said server comprising:
receiving means for receiving a request from a client for an item of data;
retrieving means for retrieving the requested item of data from a database in the form of a data stream, the data stream comprising a series of individual portions of data each of which is allocated a flag indicating the relative importance of its information content;
bandwidth measuring means for measuring the bandwidth available for transmission of data from the server through a network to a client;
identifying means for identifying in a data stream the portions of lower importance which are to be discarded so that the data stream can be transmitted within the available bandwidth as measured by the bandwidth measuring means; and
means for discarding portions of data identified by the identifying means from a data stream before transmitting the data stream to a client.
